# FASCICULE DE BREVET EUROPEEN

(11) **EP 1 553 019 B1**
(45) Date de publication et mention de la délivrance du brevet: **15.08.2007**
(21) Numéro de dépôt: 04300782.2
(22) Date de dépôt: 10.11.2004
(51) Int. Cl.: B64D 27/20, B64D 29/00, B64D 27/26

(54) **Turboréacteur destiné à être fixé sur la partie arrière du fuselage d'un avion en position supérieure**
Strahltriebwerk zur Montage auf dem Rumpfheck eines Flugzeugs
Turbofan engine mountable on top of the rear portion of an aircraft fuselage

(30) Priorité: 12.11.2003 FR 0313245
(43) Date de publication de la demande: 13.07.2005
(73) Titulaire: SNECMA, 75015 Paris (FR)
(72) Inventeur: Beutin, Bruno, 91000, Evry (FR); Yvon, Didier, 91600 Savigny sur Orge (FR); Mazeaud, Georges, 91330, Yerres (FR); Burdin, Fabien, 75017, Paris (FR)
(74) Mandataire: David, Daniel

(56) Documents cités:
- US-A- 3 735 946
- US-A- 3 809 340
- US-A- 4 044 973
- US-A- 5 443 229

## Description

L'invention concerne un avion comprenant un fuselage et deux turboréacteurs. Les turboréacteurs étant fixés de part et d'autre du fuselage.

Les constructeurs d'avions sont très préoccupés par les problèmes de bruits, qui indisposent les populations vivant à proximité des aéroports. Il s'agit pour eux de réduire au maximum les émissions sonores, provenant principalement de la soufflante et de la tuyère des turboréacteurs.

Le document US 6, 199, 795 propose un montage des turboréacteurs en position supérieure sur le fuselage arrière d'un avion ; le bruit provenant des soufflantes est partiellement réfléchi par le fuselage, tandis que le bruit provenant des tuyères est partiellement réfléchi par l'empennage arrière, que ce soit par la dérive verticale ou par le plan horizontal. En outre, le fuselage avant de l'avion fait écran en amont des turboréacteurs et limite l'ingestion de corps étrangers par ces derniers. Par ailleurs, les ailes ne supportant par les turboréacteurs sont libérées des contraintes en résultant, ce qui présente de nombreux avantages aérodynamiques.

Le problème se pose du montage et de la fixation des turboréacteurs dans cette position. Le document US 4, 044, 973 décrit un dispositif de fixation comprenant une pièce généralement appelée portemanteau, solidaire d'un mât de fixation sur le fuselage, le portemanteau, comportant des moyens d'accrochage au turboréacteur, étant fixé sur le carter du turboréacteur. De façon classique, chaque turboréacteur est fixé au fuselage à l'aide de deux desdits dispositifs, l'un au niveau d'un carter avant, l'autre au niveau d'un carter arrière.

Les deux turboréacteurs sont fixés de part et d'autre du fuselage, donc par des portions différentes de la périphérie de leur carter. Sur la périphérie de chaque carter, se trouvent également divers organes nécessaires au fonctionnement du turboréacteur, et notamment le boîtier d'accessoires équipé, bien connu sous sa dénomination anglaise de Accessory Gear Box (AGB), un réservoir d'huile, un calculateur et un organe de régulation du carburant. Ces organes seront dans la suite de la description désignés par le terme d'accessoires. Parmi les accessoires, figure le boîtier d'accessoires équipé, qui est un organe classique d'un turboréacteur, se présentant sous la forme d'un boîtier unique comprenant notamment des générateurs pour le turboréacteur et pour l'avion, des pompes à carburant et à huile, un démarreur, ainsi que divers accessoires entraînés mécaniquement par l'arbre du moteur grâce à des prises de mouvement.

Divers problèmes apparaissent pour la fixation de deux turboréacteurs en position supérieure sur le fuselage arrière d'un avion.

Un premier problème est un problème de fabrication et de coûts de production. Du fait de la disposition des turboréacteurs de part et d'autre du fuselage, les turboréacteurs gauche et droit ne sont pas identiques, puisqu'ils ne sont pas fixés par le même côté. Deux chaînes de production sont donc nécessaires à la construction des turboréacteurs. Les divers accessoires pourraient certes être placés du même côté des turboréacteurs, c'est-à-dire une fois les turboréacteurs installés dans des positions différentes par rapport au fuselage, mais d'autres problèmes apparaîtraient alors.

Tout d'abord, du point de vue de la maintenance au sol des avions, une telle situation n'est pas envisageable, les accessoires des turboréacteurs devant être accessibles depuis l'extérieur par rapport au fuselage, par des passerelles ou des chariots élévateurs, sans que les opérateurs aient à marcher sur le fuselage.

Ensuite, du point de vue de la sécurité, les divers accessoires des turboréacteurs doivent être placés de façon à ce qu'en cas d'éclatement du disque de l'un des rotors de l'un des turboréacteurs, les éclats ne puissent atteindre les accessoires de l'autre turboréacteur.

Les turboréacteurs destiné s à être montés en position latérale sur le fuselage, comme celui du document US 4, 044, 973, comprennent un boîtier d'accessoires équipé situé en position basse sur le turboréacteur. Leur structure est agencée de façon à ce que des points de fixation d'un portemanteau puissent être ménagés d'un côté ou de l'autre du turboréacteur, afin que ce dernier puisse être monté indifféremment à droite ou à gauche du fuselage de l'avion. Toutefois, dans ces turboréacteurs, si le boîtier d'accessoires équipé est effectivement accessible quel que soit le côté de montage du turboréacteur, un certain nombre d'autres accessoires, notamment des harnais, des prélèvements d'air pour l'avion, un calculateur, un réservoir d'huile, un organe régulateur de carburant, sont montés du côté de l'ouverture de la nacelle, ce qui nécessite un agencement différent pour les deux turboréacteurs.

La présente invention vise à offrir une solution commune à l'ensemble de ces problèmes, pour un turboréacteur placé en position supérieure à l'arrière du fuselage de l'avion.

A cet effet, l'invention concerne un avion selon la revendication 1.

Par l'expression "depuis l'extérieur du fuselage de l'avion", on comprendra depuis la droite d'un turboréacteur s'il est placé à droite du fuselage, depuis la gauche d'un turboréacteur s'il est placé à gauche du fuselage. La gauche et la droite s'entendent des côtés pris avec comme référence la direction et le sens de l'écoulement de l'air dans le turboréacteur, autrement dit en se plaçant face à l'avion.

Grâce à l'invention, le même turboréacteur peut être fixé d'un côté ou de l'autre du fuselage de l'avion, en le fixant à un portemanteau à l'aide des points de fixation situés d'un côté ou de l'autre du plan vertical. Il est donc simplement opéré une translation entre les deux moteurs, les accessoires restant accessibles par l'extérieur du fuselage du fait de leur positionnement. Seuls les éléments passant dans le mât du portemanteau, à savoir des canalisations de prélèvement d'air pour l'avion, des canalisations de transport de carburant et certains harnais, ne sont pas à la même place sur le turboréacteur ; toutefois, du fait du placement du turboréacteur en position supérieure sur le fuselage de l'avion, leurs points de raccord aux organes correspondants du turboréacteur peuvent être situés en position inférieure sur le turboréacteur et donc au même endroit sur chaque turboréacteur, contrairement à la solution du document US 4, 044, 973 où ils étaient soit à droite, soit à gauche.

Etant donné le problème de sécurité en cas d'éclatement du disque de l'un des rotors, il était recommandé d'utiliser une configuration semblable à celle du document US 4, 044, 973, soit en plaçant les turboréacteurs en position latérale sur le fuselage de l'avion afin d'éviter qu'il ne soient en regard direct l'un de l'autre, soit en plaçant les accessoires, autres que le boîtier d'accessoires équipés, latéralement sur le turboréacteur, d'un côté ou de l'autre en fonction du côté du montage. L'invention évite ces contraintes et permet, non seulement un montage en position supérieure du fuselage, mais encore l'obtention d'un turboréacteur identique, qu'il soit monté à gauche ou à droite.

Avantageusement, le carter arrière comprend également des points de fixation d'un portemanteau répartis de part et d'autre du plan vertical.

Les portemanteaux de fixation au carter arrière sont ici classiques, car aucun élément ne gêne leur mise en place.

Dans la forme de réalisation préférée de l'avion de l'invention, le turboréacteur comprend un capot de soufflante pouvant se scinder en deux parties, l'une pouvant basculer vers le haut et l'autre pouvant basculer vers le bas pour libérer l'accès aux accessoires du côté du montage du turboréacteur.

De préférence dans ce cas, la partie pouvant basculer vers le bas est articulée en deux parties.

L'invention concerne également un avion comprenant un fuselage, deux turboréacteurs selon l'invention, fixés de part et d'autre du fuselage en position supérieure à l'aide de d'un portemanteau fixé sur le carter avant et d'un portemanteau fixé sur le carter arrière.

L'invention sera mieux comprise à l'aide de la description suivante de la forme de réalisation préférée de l'avion de l'invention, en référence au dessin annexé, sur lequel :
- la figure 1 représente une vue schématique de face de deux turboréacteurs selon la forme de réalisation préférée de l'invention, placés sur le fuselage d'un avion ;
- la figure 2 représente une vue schématique de profil de gauche du turboréacteur droit de la figure 1, et
- la figure 3 représente une vue schématique de face des deux turboréacteurs de la figure 1 dont les capots de soufflantes sont ouverts.

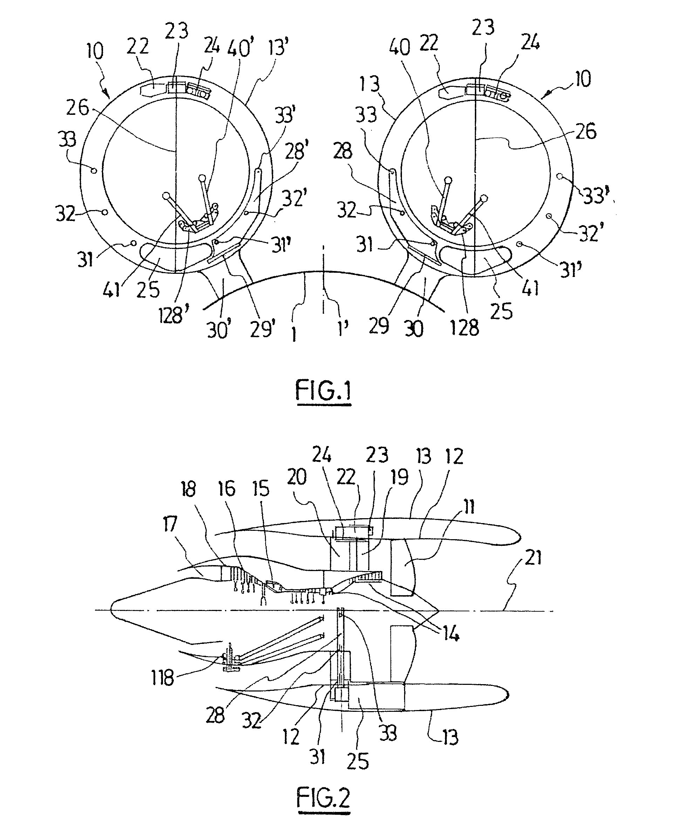

Sur la figure 1, sont représentés deux turboréacteurs 10 montés sur la partie arrière du fuselage 1 d'un avion, en position supérieure. Sur la figure 2, est représenté le turboréacteur 10 droit de la figure 1, vu de profil de gauche, la gauche et la droite s'entendant, comme défini dans le préambule de la présente demande, des côtés pris avec comme référence la direction et le sens de l'écoulement de l'air dans le turboréacteur. Les notions d'aval et d'amont seront également prises par rapport à cet écoulement.

Le turboréacteur 10 comprend une soufflante 11, entourée par un carter avant 12, lui-même protégé par un capot de soufflante 13, 13'. En aval de la soufflante 11, le turboréacteur comprend successivement un compresseur 14, une chambre de combustion 15, une turbine 16 et une tuyère 17. Un carter arrière 18, maintenu par des bras, se situe en aval de la turbine 16.

Plus précisément, le carter avant 12 se divise en un carter de rétention et un carter intermédiaire, le carter de rétention entourant la soufflante 11 et le carter intermédiaire des aubes de redressement 19 et des bras de maintien 20. La structure du carter 12 avant ne sera toutefois pas détaillée plus avant et on se référera dans la suite de la description au carter avant 12 dans sa globalité.

A la périphérie du carter avant 12, sont disposés les accessoires, à savoir ici un réservoir d'huile 22, un organe régulateur de carburant 23, un calculateur 24 et un boîtier d'accessoires équipé 25.

Le turboréacteur 10 s'étend suivant un axe 21. Dans la forme de réalisation préférée du turboréacteur 10 de l'invention, le réservoir d'huile 22, l'organe régulateur de carburant 23 et le calculateur 24 sont placés, de gauche à droite dans cet ordre, sur la partie supérieure du carter avant 12, à proximité du plan vertical 26 contenant l'axe 21 du turboréacteur 10, longitudinalement au niveau des aubes de redressement 19. Plus précisément, ils sont placés de façon à être aussi proches que possible du plan vertical 26, et agencés de façon à présenter, que le turboréacteur 10 soit placé à droite ou à gauche sur le fuselage de l'avion, une surface minimale d'impact potentiel en cas d'éclatement du disque de l'un des rotors du turboréacteur situé en face.

Le boîtier d'accessoires équipé 25 est placé sur la partie inférieure du carter avant 12, à proximité du plan vertical 26, longitudinalement au niveau des aubes de redressement 19, pour sa partie aval. Le boîtier d'accessoires équipé 25 comprend notamment des générateurs pour le turboréacteur et pour l'avion, des pompes à carburant et à huile, un démarreur, ainsi que divers accessoires entraînés mécaniquement par l'arbre du turboréacteur, grâce à des prises de mouvement. De la même façon, il est agencé de façon à présenter une surface minimale d'impact en cas d'éclatement du disque de l'un des rotors du turboréacteur situé en face.

Le carter avant 12 comprend des moyens de fixation d'un portemanteau 28, 28'. Chaque portemanteau 28, 28' se présente sous la forme d'une pièce métallique agencée de façon à s'adapter à une portion du carter 12 pour être fixée sur lui, soit sur sa partie droite (portemanteau 28'), soit sur sa partie gauche (portemanteau 28). Chaque portemanteau 28, 28' comprend une platine 29, 29' de fixation à un bras, ou mât, 30 , 30', le bras 30, 30' étant rendu solidaire du fuselage 1 de l'avion, soit sur sa partie gauche (bras 30'), soit sur sa partie droite (bras 30).

Les moyens de fixation du portemanteau 28 au carter 12 comportent des points de fixation 31, 32, 33, 31', 32', 33', bien connus de l'art antérieur et qui ne seront pas décrits ici, le détail de leur structure n'étant pas nécessaire à la compréhension de l'invention. Ces points de fixation 31, 32, 33, 31', 32', 33' sont disposés de part et d'autre par rapport au plan vertical 26, plus précisément de façon symétrique par rapport à ce dernier. Ainsi, trois points de fixation 31, 32, 33 sont placées le long d'une portion gauche du carter avant 12, les trois autres points de fixation 31', 32', 33' étant placés le long d'une portion droite du carter 12, de façon symétrique par rapport au plan 26. Le portemanteau 28 peut ainsi être fixé sur la partie gauche du carter 12, grâce aux points de fixation 31, 32, 33, et le portemanteau 28' sur la partie droite du carter 12, grâce aux points de fixation 31', 32', 33'.

Les points de fixation 31, 32, 33, 31', 32', 33', placés de part et d'autre du plan vertical 26, sont placés de part et d'autre du boîtier d'accessoires équipé 25. Chaque portemanteau 28, 28' est fixé au turboréacteur 10 en porte-à-faux par rapport à son bras 30, 30' de liaison au fuselage, c'est-à-dire que chaque portemanteau 28, 28' ne s'étend que d'un côté par rapport à ce bras de support 30, 30', du côté opposé au boîtier d'accessoires équipé 25. En effet, ce dernier s'étend dans le même plan ou un plan proche de celui du portemanteau 28, 28' et ne permet pas sa fixation en son endroit. Ainsi, le portemanteau 28 fixé à droite du fuselage de l'avion s'étend vers la gauche et vers le haut à partir de son bras 30 de liaison au fuselage de l'avion, le portemanteau 28' situé à gauche s'étendant vers la droite et vers le haut. Chaque portemanteau 28, 28' est ici placé adjacent au boîtier d'accessoires équipé 25, d'un côté ou de l'autre.

Les efforts sur les points de fixation 31, 32, 33, 31', 32', 33' sont, du fait du placement des turboréacteurs 10 en position haute, des efforts de compression. Ces points de fixation sont agencés en conséquence, et dimensionnés de façon à prendre en compte l'effet de porte-à-faux des portemanteaux 28, 28'.

Grâce au placement symétrique des points de fixation 31, 32, 33, 31', 32', 33', le même turboréacteur 10 peut indifféremment être placé à droite ou à gauche du fuselage 1 de l'avion. Il suffit pour cela de le fixer au portemanteau 28, 28' grâce aux points de fixation ((31, 32, 33), (31', 32', 33')) ad hoc.

Du point de vue de la production, cela permet de ne construire qu'un type de turboréacteur 10, pouvant être placé soit sur la gauche soit sur la droite du fuselage 1.

En ce qui concerne l'accès aux accessoires du turboréacteur 10, leur placement à proximité du plan vertical 26, en position supérieure du turboréacteur 10 pour ce qui est du réservoir d'huile 22, de l'organe régulateur de carburant 23 et du calculateur 24, en position inférieure du turboréacteur 10 pour ce qui est du boîtier d'accessoires équipé 2 5, leur permet d'être accessibles indifféremment par la droite ou par la gauche du turboréacteur 10. Leur accessibilité sera d'autant moins dépendante du placement à gauche ou à droite du turboréacteur 10 qu'ils seront placés plus proches du plan 26.

Le capot de soufflante 13 , 13' est différent selon le placement du turboréacteur 10. Il est agencé sur le turboréacteur 10 de façon à ce que les accessoires 22, 23, 24, 25 de celui-ci soient accessibles depuis l'extérieur du fuselage 1.

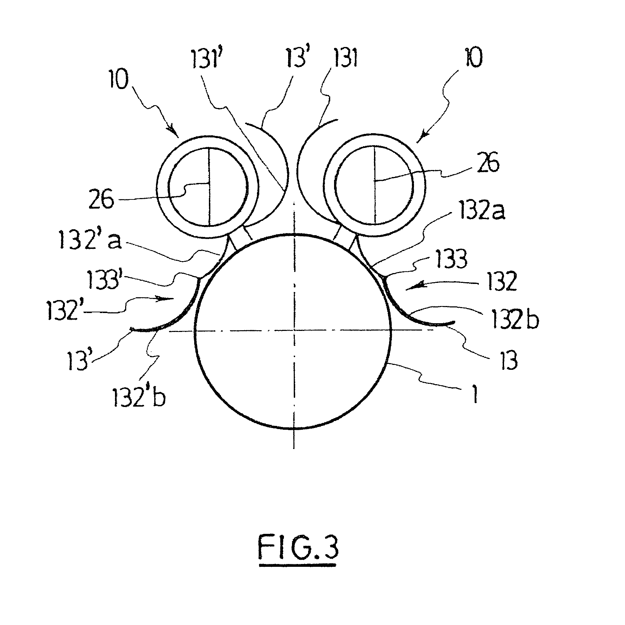

En référence à la figure 3, lorsque le turboréacteur 10 est placé à gauche de l'avion, le capot de soufflante 13' est agencé de façon à pouvoir s'ouvrir pour libérer un accès par la gauche de l'avion, tandis que lorsque le turboréacteur 10 est placé à droite de l'avion, le capot de soufflante 13 est agencé de façon à pouvoir s'ouvrir pour libérer un accès par la droite de l'avion.

Chaque capot de soufflante 13, 13' s'ouvre en se scindant en deux parties (131, 132), (131', 132'). Une partie 131, 131' bascule vers le haut du turboréacteur 10 et l'autre partie 132, 132' bascule vers le bas du turboréacteur 10. La partie 132, 132' basculant vers le bas est articulée, autour d'une charnière 133, 133', en deux parties (132a, 132b), (132'a, 132'b). De cette manière, l'angle d'ouverture et donc l'espace d'accès au turboréacteur 10 libéré par le basculement des deux parties (131, 132), (131', 132') d'un capot de soufflante 13, 13' est plus grand qu'en l'absence d'articulation. Les accessoires 22, 23, 24, 25 dans leur ensemble sont bien accessibles quel que soit le placement du turboréacteur.

En outre, de nouveau, les accessoires 22, 23, 24, 25 d'un turboréacteur 10 sont placés relativement à l'autre turboréacteur 10 de telle manière qu'il ne sont pas ou peu atteignables en cas d'éclatement du disque de l'un des rotors de l'autre turboréacteur 10.

Un turboréacteur 10 est fixé au fuselage 1 de l'avion, d'une part, au niveau du carter avant 12, comme il vient d'être abordé, d'autre part, au niveau du carter arrière 18. En ce qui concerne ce dernier, un portemanteau 128, 128', ou ferrure, so lidaire du fuselage 1 grâce à des bras, est fixé au carter 18, au niveau par exemple de la turbine 16. Le carter 18 comprend à ce niveau des points de fixation, de même que précédemment répartis sur le carter 18 de manière symétrique par rapport au plan vertical 26. On peut par conséquent fixer le même turboréacteur 10, au niveau de son carter arrière 18, indifféremment d'un côté ou de l'autre du fuselage 1, en utilisant les points de fixation ad hoc.

Au niveau du portemanteau 128, 128', sont fixées deux biellettes (40, 41), (40', 41') de transmission de poussée, dont l'autre extrémité est fixée en amont sur le turboréacteur 10, afin que la poussée soit transmise à l'avion non pas par le bras lié au portemanteau 128, 128' mais par le bras 30, 30' lié au carter avant 12. Ces biellettes (40, 41), (40', 41') de transmission de poussée sont bien connues de l'art antérieur et ne seront pas détaillées plus précisément.

Les points de fixation 31, 32, 33, 31', 32', 33' du carter avant 12 ou les points de fixation du carter arrière 18 se regroupent fonctionnellement en triplets (31, 32, 33), (31', 32', 33'), chaque triplet ayant pour fonction la fixation d'un portemanteau 28, 28' d'un côté du turboréacteur 10. Il convient de noter que, dans la forme de réalisation préférée du turboréacteur de l'invention, les points de fixation 32, 32' se situant entre les deux autres (31, 33), (31', 33') ne servent pas directement à la fixation du portemanteau 28, 28' ; ce sont des points de fixation dits "d'attente", présents uniquement pour pallier une défaillance des deux autres. Ces points de fixation d'attente 32, 32' pourrait être supprimés pour être remplacés par des éléments remplissant la même fonction, comme des doubles bielles par exemple.

Il convient de noter que les parties 132, 132' de capots 13, 13' basculant vers le bas peuvent éventuellement être articulées en plus de deux parties, par exemple trois, afin de libérer un espace d'accès encore plus large.

Enfin, un dispositif anti-siphon peut être intégré au réservoir d'huile 22 afin d'éviter, à l'arrêt, une rétention d'huile dans les équipements par effet gravitationnel.

## Revendications

1. Avion comprenant un fuselage (1), deux turboréacteurs, les turboréacteurs étant fixés de part et d'autre du fuselage (1) de l'avion, chacun par le biais d'au moins un portemanteau ((28, 128), (28', 128')), le portemanteau comportant une platine de fixation à un bras (30, 30'), le bras (30, 30') étant rendu solidaire du fuselage (1) de l'avion, chaque turboréacteur (10) comprenant une soufflante (11), un carter avant (12), un carter arrière (18), des accessoires (22, 23, 24, 25) disposés à la périphérie du carter avant (12), le carter avant (12) comprenant des points ((31, 32, 33), (31', 32', 33')) de fixation du portemanteau (28, 28'), les points de fixation ((31, 32, 33), (31', 32', 33')) du portemanteau (28, 28') au carter avant (12) étant répartis de part et d'autre du plan vertical (26) contenant l'axe du turboréacteur, de façon à permettre un montage du turboréacteur (10) indifféremment d'un côté ou de l'autre du fuselage (1), les accessoires (22, 23, 24, 25) étant placés à proximité dudit plan vertical (26), de façon à être accessibles depuis l'extérieur du fuselage (1) quel que soit le côté du montage, **caractérisé par le fait que**, chaque turboréacteur étant fixé en position supérieure sur la partie arrière du fuselage (1) de l'avion, les accessoires comprenant au moins un réservoir d'huile (22), un organe régulateur de carburant (23) ou un calculateur (24), placés sur la partie supérieure du carter avant (12), et un boîtier d'accessoires équipé (25), placé sur la partie inférieure du carter avant (12), le portemanteau (28, 28') est fixé en porte-à-faux par rapport à son bras de fixation à l'avion, le portemanteau ne s'étendant que d'un côté par rapport à son bras de fixation à l'avion, du côté opposé au boîtier d'accessoires équipé (25), les points de fixation ((31, 32, 33), (31', 32', 33')) étant répartis de part et d'autre du boîtier d'accessoires équipé (25).

2. Avion selon la revendication 1, dans lequel les points de fixation ((31, 32, 33), (31', 32', 33')) d'un portemanteau (28, 28') au carter avant (12) de chaque turboréacteur sont répartis de façon symétrique par rapport au plan vertical (26).

3. Avion selon l'une des revendications 1 ou 2, dans lequel le carter avant (12) de chaque turboréacteur comprend, de chaque côté du plan vertical (26), deux points de fixation ((31, 33), (31', 33')) et un point de fixation d'attente (32, 32') situé entre les deux points de fixation ((31, 33), (31', 33')).

4. Avion selon l'une des revendications 1 à 3, dans lequel le carter arrière (18) de chaque turboréacteur comprend également des points de fixation d'un portemanteau (128, 128') répartis de part et d'autre du plan vertical (26).

5. Avion selon la revendication 4, dans lequel les points de fixation d'un portemanteau (128, 128') au carter arrière (18) de chaque turboréacteur sont répartis de manière symétrique par rapport au plan vertical (26).

6. Avion selon l'une des revendications 1 à 5, dans lequel chaque turboréacteur comprend un capot de soufflante (13, 13') pouvant se scinder en deux parties ((131, 132), (131', 132')), l'une (131, 131') pouvant basculer vers le haut et l'autre (132, 132') pouvant basculer vers le bas pour libérer l'accès aux accessoires (22, 23, 24, 25) du côté du montage du turboréacteur.

7. Avion selon la revendication 6, dans lequel la partie (132, 132') pouvant basculer vers le bas est articulée en deux parties ((132a, 132b), (132'a, 132'b)).

## Claims

1. Aircraft comprising a fuselage (1), two turbojets, the turbojets being attached on either side of the fuselage (1) of the aircraft, each by means of at least one davit ((28, 128), (28', 128')), the davit comprising a plate for attachment to an arm (30, 30'), the arm (30, 30') being fixedly attached to the fuselage (1) of the aircraft, each turbojet (10) comprising a fan (11), a front casing (12), a rear casing (18), accessories (22, 23, 24, 25) placed on the periphery of the front casing (12), the front casing (12) comprising points ((31, 32, 33), (31', 32', 33')) for attaching the davit (28, 28'), the points ((31, 32, 33), (31', 32', 33')) for attaching the davit (28, 28') to the front casing (12) being distributed on either side of the vertical plane (26) containing the axis of the turbojet, in order to allow the turbojet (10) to be mounted equally on one side or the other of the fuselage (1), the accessories (22, 23, 24, 25) being placed close to the said vertical plane (26), so as to be accessible from the outside of the fuselage (1) irrespective of the side of mounting, **characterized in that**, each turbojet being attached in a top position on the rear portion of the fuselage (1) of the aircraft, the accessories comprising at least one oil reservoir (22), a fuel regulator member (23) or a computer (24) placed on the top portion of the front casing (12), and a fitted-out accessories module (25), placed on the bottom portion of the front casing (12), the davit (28, 28') is attached in a cantilever manner relative to its arm of attachment to the aircraft, the davit extending only on one side relative to its arm of attachment to the aircraft, on the side opposite to the fitted-out accessories module (25), the attachment points ((31, 32, 33), (31', 32', 33')) being distributed on either side of the fitted-out accessories module (25).

2. Aircraft according to Claim 1, in which the points ((31, 32, 33), (31', 32', 33')) for attaching a davit (28, 28') to the front casing (12) of each turbojet are distributed symmetrically relative to the vertical plane (26).

3. Aircraft according to one of Claims 1 or 2, in which the front casing (12) of each turbojet comprises, on each side of the vertical plane (26), two attachment points ((31, 33), (31', 33')) and one reserve attachment point (32, 32') situated between the two attachment points ((31, 33), (31', 33')).

4. Aircraft according to one of Claims 1 to 3, in which the rear casing (18) of each turbojet also comprises points for attaching a davit (128, 128') distributed on either side of the vertical plane (26).

5. Aircraft according to Claim 4, in which the points for attaching a davit (128, 128') to the rear casing (18) of each turbojet are distributed symmetrically relative to the vertical plane (26).

6. Aircraft according to one of Claims 1 to 5, in which each turbojet comprises a fan cowl (13, 13') that is able to be split into two portions ((131, 132), (131', 132')), one (131, 131') being able to tilt upwards and the other (132, 132') being able to tilt downwards to clear access to the accessories (22, 23, 24, 25) on the side of the mounting of the turbojet.

7. Aircraft according to Claim 6, in which the portion (132, 132') that can tilt downwards is articulated in two portions ((132a, 132b), (132'a, 132'b)).

## Patentansprüche

1. Flugzeug, das einen Rumpf (1), zwei Strahltriebwerke aufweist, wobei die Strahltriebwerke beiderseits des Rumpfs (1) des Flugzeugs befestigt sind, jeweils über wenigstens einen Bügel ((28, 128), (28`, 128`)), wobei der Bügel eine Platte zur Befestigung an einem Arm (30, 30') aufweist, wobei der Arm (30, 30') mit dem Rumpf (1) des Flugzeugs fest verbunden ist, wobei jedes Strahltriebwerk (10) einen Fan (11), ein vorderes Gehäuse (12), ein hinteres Gehäuse (18) und Zubehörteile (22, 23, 24, 25) aufweist, die am Umfang des vorderen Gehäuses (12) angeordnet sind, wobei das vordere Gehäuse (12) Punkte ((31, 32, 33), (31', 32', 33')) zur Befestigung des Bügels (28, 28') aufweist, wobei die Punkte zur Befestigung ((31, 32, 33), (31', 32', 33')) des Bügels (28, 28') am vorderen Gehäuse (12) beiderseits der vertikalen Ebene (26), welche die Achse des Strahltriebwerks enthält, derart verteilt sind, daß eine Montage des Strahltriebwerks (10) unterschiedslos an einer oder der anderen Seite des Rumpfs (1) möglich ist, wobei die Zubehörteile (22, 23, 24, 25) in der Nähe der vertikalen Ebene (26) derart untergebracht sind, daß sie von außerhalb des Rumpfs (1) unabhängig von der Seite der Montage zugänglich sind, **dadurch gekennzeichnet, daß**, da jedes Strahltriebwerk an oberer Position an dem hinteren Teil des Rumpfs (I) des Flugzeugs befestigt ist, wobei die Zubehörteile wenigstens einen Ölbehälter (22), ein Brennstoffregelorgan (23) oder einen Rechner (24), die an dem oberen Teil des vorderen Gehäuses (12) untergebracht sind, und ein ausgestattetes Zubehörschrankgehäuse (25) aufweisen, das am unteren Teil des vorderen Gehäuses (12) untergebracht ist, der Bügel (28, 28') bezüglich seines Arms zur Befestigung am Flugzeug freitragend befestigt ist, wobei sich der Bügel nur an einer Seite bezüglich seines Arms zur Befestigung am Flugzeug an der Seite gegenüber dem ausgestatteten Zubehörschrankgehäuse (25) erstreckt, wobei die Befestigungspunke ((31, 32, 33), (31', 32', 33')) beiderseits des ausgestatteteten Zubehörschrankgehäuses (25) verteilt sind.

2. Flugzeug nach Anspruch 1,bei welchem die Punkte zur Befestigung ((31, 32, 33), (31', 32', 33')) eines Bügels (28, 28') am vorderen Gehäuse (12) jedes Strahltriebwerks auf symmetrische Weise bezüglich der vertikalen Ebene (26) verteilt sind.

3. Flugzeug nach einem der Ansprüche 1 oder 2, bei welchem das vordere Gehäuse (12) jedes Strahltriebwerks an jeder Seite der vertikalen Ebene (25) zwei Befestigungspunkte ((31, 33), (31', 33')) und einen zwischen den Befestigungspunkten ((31, 33), (31', 33')) gelegenen Reservebefestigungspunkt (32, 32') aufweist.

4. Flugzeug nach einem der Ansprüche 1 bis 3, bei welchem das hintere Gehäuse (18) jedes Strahltriebwerks ebenfalls Punkte zur Befestigung eines Bügels (128, 128') aufweist, die beiderseits der vertikalen Ebene (26) verteilt sind.

5. Flugzeug nach Anspruch 4, bei welchem die Punkte zur Befestigung eines Bügels (128, 128') am hinteren Gehäuse (18) jedes Strahltriebwerks auf symmetrische Weise bezüglich der vertikalen Ebene (26) verteilt sind.

6. Flugzeug nach einem der Ansprüche 1 bis 5, bei welchem jedes Strahltriebwerk eine Fan-Haube (13, 13') aufweist, die sich in zwei Teile ((131, 132), (131', 132')) spalten kann, wobei der eine (131, 131') nach oben und der andere (132, 132' nach unten kippen kann, um den Zugang zu den Zubehörteilen (22, 23, 24, 25) an der Seite der Montage des Strahltriebwerks freizugeben.

7. Flugzeug nach Anspruch 6, bei welchem der Teil (132, 132'), der nach unten kippen kann, in zwei Teilen ((132a, 132b), (132'a, 132`b)) angelenkt ist.
